Europäisches Patentamt

European Patent Office

Office européen des brevets

(19)

(11) Publication number: **0 134 648**
**B1**

(12) **EUROPEAN PATENT SPECIFICATION**

(45) Date of publication of patent specification: **21.09.88**

(51) Int. Cl.⁴: **H 04 N 1/40,** H 04 N 1/18

(21) Application number: **84304542.8**

(22) Date of filing: **03.07.84**

(54) **Half-tone image reproduction.**

(30) Priority: **12.07.83 GB 8318835**

(43) Date of publication of application:
**20.03.85 Bulletin 85/12**

(45) Publication of the grant of the patent:
**21.09.88 Bulletin 88/38**

(84) Designated Contracting States:
**DE GB**

(56) References cited:
**DE-A-2 459 613**
**DE-A-2 500 564**
**GB-A-2 026 283**
**US-A-4 004 079**

(73) Proprietor: **CROSFIELD ELECTRONICS LIMITED**
**De La Rue House 3/5 Burlington Gardens**
**London W1A 1DL (GB)**

(72) Inventor: **Messiou, Antoine Yvon**
**5 Buckingham Road**
**Wood Green London N22 (GB)**

(74) Representative: **Skone James, Robert Edmund**
**et al**
**GILL JENNINGS & EVERY 53-64 Chancery Lane**
**London WC2A 1HN (GB)**

Courier Press, Leamington Spa, England.

## Description

The invention relates to methods and apparatus for generating a half-tone reproduction of an image.

One method of half-tone reproducing an image comprises exposing a display surface to a plurality of light beams arranged side by side which contribute in a single pass to the formation of part or all of a number of half-tone dot areas, the light beams being modulated in accordance with the image information and half-tone dot information to generate a half-tone representation of the image. Such a method is hereinafter referred to as of the kind described.

The display surface may be a recording medium for example for use in a photo-gravure printing process. It is common also for the image information to have been processed in order to enhance the half-tone representation prior to exposing the display surface to the light beams.

One such method of the kind described is illustrated in more detail in our British Patent Specification GB—A—1,523,032.

The half-tone representation generated by the light beams comprises an array of dots the size of which varies in accordance with the image and half-tone information. Although the use of a plurality of light beams arranged side by side has increased the accuracy with which an image can be reproduced, problems have arisen where slight misalignment has occurred between adjacent light beams. Where the light beams should normally expose adjacent, uniformly overlapping areas, small inaccuracies can result in a small amount of extra overlap and a corresponding under-exposed area. This lack of uniformity of the density caused in each dot in the direction transverse to the scanning direction, is undetectable to the unaided eye. The dots in themselves are not visible hence sub-dot non-uniformities should cause no visual effect. However, we have found that when half-tone dot arrays are generated electronically at different angles for the different colour separations so as to avoid conventional moire effects and colour shift, parallel striations of varying intensity are immediately apparent. The striations lie in directions different from the scanning direction and from the screen angle. We think that this arises from the fact that the eye forms lines of those dots which have the same intensities. These striations form in themselves a type of moire pattern.

This moire pattern effect should be distinguished from moire patterns arising when colour separations are superimposed. One solution to this problem is described in our British Patent Specification GB—A—1493924.

In accordance with one aspect of the present invention, a method of the kind described comprises applying a cyclic modulation to the intensities of the light beams transversely to the scanning direction.

The repetitive modulation of the light beam intensities has the effect of generating a compensating moire pattern which can be adjusted effectively to cancel out the original moire pattern.

In order to minimise the effect of the original moire pattern, it is particularly convenient if, in a preliminary step, one or more of the frequency, phase, and amplitude of the cyclic modulation of intensities can be varied to determine an optimum. In this connection, we have found that changes in screen angle or dot formation parameters will generally require changes in one or more of these three parameters of the light beams.

The intensities of the light beams may for example follow a triangular wave variation but preferably they vary in a sinusoidal manner.

Typically, four or more light beams may be provided, particularly six.

In accordance with a second aspect of the present invention, apparatus for generating a half-tone reproduction of an image comprises a support for a display surface; means for generating a plurality of light beams arranged side by side, the dislay surface and the light beams being relatively movable whereby the display surface is scanned by the beams; first modulating means for modulating the light beams in accordance with image information and half-tone information; and second modulating means for applying a cyclic modulation to the intensities of the light beams transversely to the scanning driection.

The means for generating the light beams may comprise a number of light sources or a laser in conjunction with a beam splitter and a plurality of modulators. This is more fully described in our British Patent Specification GB—A—1,523,032. The light beams could also be generated by a suitably controlled single beam.

An example of a method and apparatus in accordance with the invention will now be described with reference to the accompanying drawings, in which:—

Figure 1 is a schematic view of colour scanning apparatus;

Figure 2 illustrates schematically an enlarged portion of an exposed recording medium; and,

Figure 3 illustrates graphically the variation in intensity of the subsidiary light beams generated by the apparatus of Figure 1.

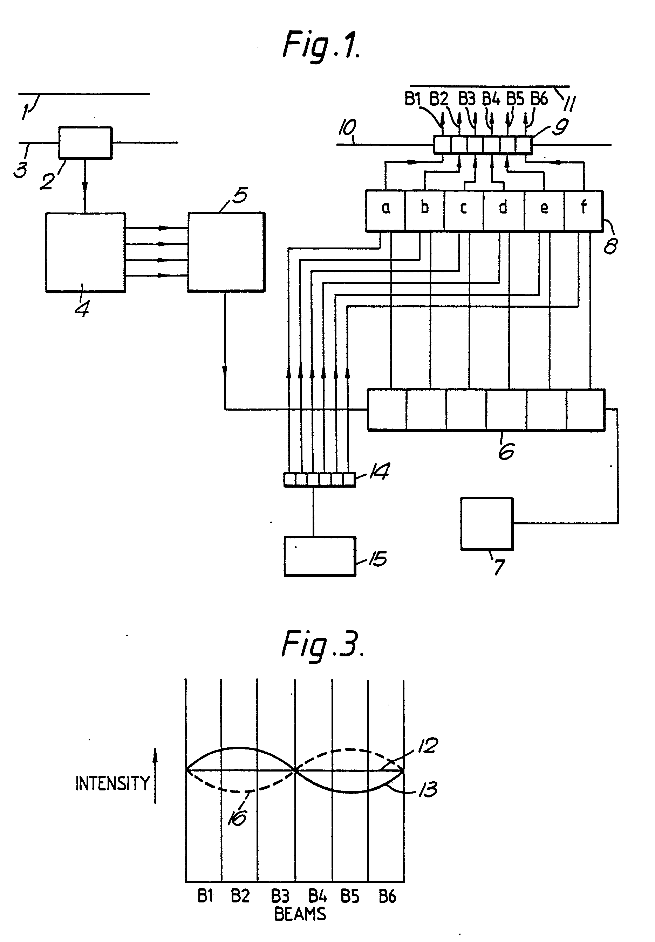

The colour scanning apparatus illustrated in Figure 1 is for generating colour separations for use in a photo-gravure process. The apparatus comprises a scanning drum 1 which supports a transparency in use, and a detector 2 for scanning the image contained in the transparency and carried on the scanning drum 1. The detector 2 is mounted on a lead screw 3 so that in use, the drum 1 is rotated about its axis parallel with the lead screw 3 and the lead screw 3 is also rotated whereby the detector 2 scans the transparency on the drum 1. The transparency is scanned to determine the tonal density of three colours at each point in the transparency. Typically, these three colours will be red, green, and blue. Electrical signals representing the tonal densities are fed to conventional processing means 4 where modifications and enhancements can be made in a conventional manner. The processing means 4 generates four output signals representing the tonal densities of the colours cyan, yellow, magenta, and black and these signals are fed to a controller, such as a microcomputer 5. The microcomputer 5 may either store the signals for later use or may feed them directly to a set of six beam computers 6.

The beam computers 6 determine from the signals fed from the controller 5 and in response to half-tone dot information from a store 7 modulator control signals which are fed, via respective adders 8 to a set of six electro-optical modulators 9. The modulators 9 are mounted on a lead screw 10 and receive respective light beams from a laser source (not shown) which, after modulation by the modulators 9, impinge on a record medium carried by an exposing drum 11. In use, the lead screw 10 rotates to move the modulators 9 from left to right, as seen in Figure 1, while the exposing drum 11 rotates about its axis parallel with the lead screw 10 so that the light beams, which are labelled B1—B6, effectively traverse the entire record medium supported on the exposing drum 11 by describing a helical path. In this way, a half-tone image of the original image contained in the transparency is formed. In practice, the four colour separations for cyan, magneta, yellow, and black are formed successively.

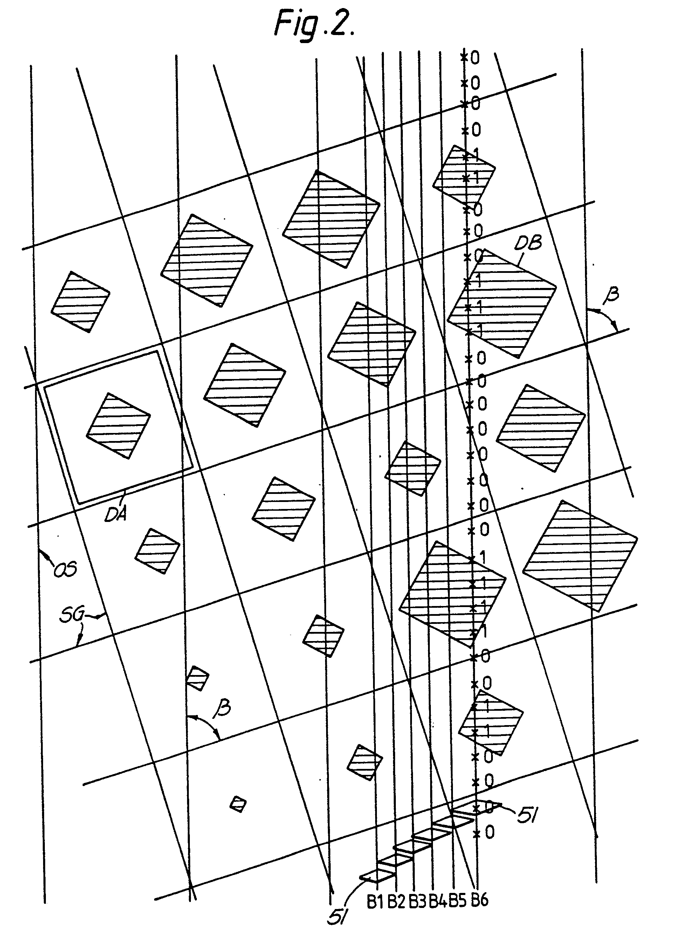

The light beams B1—B6 together form a composite light beam which has a width sufficient to expose, in this example part, or all of a half-tone dot area and this may be seen more clearly in Figure 2. Figure 2 illustrates the appearance of a portion of the recording medium. In Figure 2, vertical lines in the output surface (OS) are perpendicular to the axis of the drum 11, and horizontal lines are parallel to the axis of drum 11 so that the helical path of the light beams B1—B6 relatively to the output surface (OS) is very closely parallel to the vertical lines. For a screen angle β, the half-tone dots are created in an imaginary screen grid (SG) at the angle β to the output surface (OS). It should be understood that the screen grid (SG) has no physical existence but is electronically generated. The screen grid (SG) is divided into square areas (DA) within each of which a half-tone dot may be formed. Examples of the path of the scanning beams B1—B6 during one pass are shown. At successive points in the path of each beam (marked with a cross for beam B6) the picture signal is determined by the beam computers 6, and this dictates whether a part of a dot is required at that position on the output surface (OS) to represent the particular level of tonal density for the colour in question at the corresponding point in the original image. The tonal density may vary over the region and hence the sizes of the dots may vary as shown in Figure 2. The dots may also not all have the same shape. The dots shown in Figure 2 by way of example are square dots "tilted" at 45° to the grid, the shaded areas being bounded by the dot boarders (DB).

The pattern of dots shown may be created on the recording medium by controlling the scanning beams by an "on/off" signal in accordance with whether the scanning beams lie over a dot ("on") or a space ("off") in the overlying screen grid. At each point marked x, the value of the signal is indicated by "1" or "0". The signal is obtained subsequently for all similar points along the helical path of the scan which overlie the output surface (OS).

In operation, the drum 11 rotates at a relatively fast rate compared with movement of the beams B1—B6 parallel with the drum axis so that the beams effectively traverse the entire recording medium in a helical path.

Figure 3 illustrates diagrammatically the intensity of the six beams B1—B6 emitted from the modulators 9 at one point during the exposing step. In this example, a line 12 indicates that each beam should have the same intensity at that point and a line of a half-tone dot area DA should be uniformly exposed. However, as has previously been explained, such uniformity is not always achieved in practice and leads to the generation of moire patterns within each colour separation.

In order to deal with this problem, the set of six adders 8 are interposed between the beam computers 6 and the modulators 9. The adders 8 add an offset to each of the signals generated by the beam computer 6 so that instead of a uniform intensity for all six beams B1—B6, a modulation in the beam intensities is achieved. One example of such a modulation is shown in Figure 3 by a line 13. This illustrates that the composite light beam formed by the subsidiary beams B1—B6 exhibits a sinusoidal variation in intensity across its width. This modulation would be small compared with the absolute intensity indicated by the line 12 (typically up to 2 or 3%) and so would not be readily visible to the human eye but will have the effect of minimizing the generation of moire patterns. In other words, it may be considered that a spatially cyclic error is introduced to compensate for the optical moire-forming error.

To achieve this modulation, each of the adders 8 is connected to a respective EPROM 14 which stores values which are added in the adders 8 to the respective signals from the beam computer 6. Thus, to achieve the modulation shown by the line 13, adders 8a and 8c add a similar positive offset to the respective signals from the beam computer 6 while the adder 8b adds a larger positive offset to the incoming picture signal. Conversely, adders 8d, 8f add a negative offset having a magnitude substantially the same as the offset added by adders 8a, 8c and the adder 8e adds a larger negative offset having a magnitude similar to that added by the adder 8b. As has been mentioned, these offsets are stored by the EPROM's 14.

In order to obtain the optimum modulation in the intensity of the beams B1—B6, control means 15, such as a microcomputer, are provided to adjust the contents of the EPROM's 14. Typically, at start-up, the control means 15 will cause the EPROM's 14 to store a fixed amplitude. That is to say, the maximum offset from the intensity indicated by the line 12 will be fixed. The control means 15 then varies the phase of the modulation, i.e. the sinusoidal variation is maintained with a fixed maximum amplitude but the position of the peaks and troughs is shifted in a series of stages one of which is illustrated by a dashed line 16 in Figure 3. At each stage, the recording medium on the exposing drum 11 is exposed and the exposed mediums are compared to decide which has the least visible moire pattern. The control means 15 then fixes the phase at the optimum position determined and then causes the EPROM's 14 to store different offsets corresponding to different maximum amplitudes, and the process is repeated to determine the optimum maximum amplitude. This optimizing procedure is then repeated for the remaining colours with the EPROM's 14 storing appropriate values. In some cases offsets may only be added during the preparation of one or two separations although preferably this will be carried out for all separations. Once the optimum phase and maximum amplitude have been found these are then fixed and the colour scanner is ready for full operation. Additionally, if required, the frequency of the modulation could be varied to determine an optimum frequency. Thus, in Figure 3, the beams B1—B6 extend across one wavelength of the modulation but this could be changed.

The operation of the scanner shown in Figure 1 is thus principally as described before except that the signals from the beam computer 6 are not fed directly to the modulators 9 but are fed via the adders 8 where appropriate offsets are added. The controller 5 causes the correct set of offsets to be read from the EPROM's 14 in accordance with the colour separation being generated.

**Claims**

1. A method of generating a half-tone reproduction of an image, the method comprising exposing a display surface to a plurality of light beams (B1—B6) arranged side by side which contribute in a single pass to the formation of part or all of a number of half-tone dot areas, the light beams being modulated in accordance with image information and half-tone information to generate a half-tone representation of the image characterised by applying a cyclic modulation to the intensities of the light beams (B1—B6) transversely to the scanning direction.

2. A method according to claim 1, wherein, in a predetermined step, one or more of the frequency, phase, and amplitude of the cyclic modulation of the intensities is varied to determine an optimum.

3. A method according to claim 2, wherein a plurlaity of colour separations are generated, the optimum cyclic modulation being predetermined for each separation.

4. A method according to claim 1 or claim 2, wherein the light beams (B1—B6) are modulated in a sinusoidal manner.

5. Apparatus for generating a half-tone reproduction of an image, the apparatus comprising a support (11) for a display surface; means for generating a plurality of light beams (B1—B6) arranged side by side, the display surface and the light beams being relatively movable whereby the display surface is scanned by the beams; and first modulating means (9) for modulating the light beams (B1—B6) in accordance with image information and half-tone information, characterised by second modulating means for applying a cyclic modulation to the intensities of the light beams (B1—B6) transversely to the scanning direction.

6. Apparatus according to claim 5, wherein the first modulating means comprises one or more beam computers (6) for generating modulator control signals for controlling respective beam modulators (9), the second modulating means comprising one or more adders (8), one for each modulator (9), the adders being arranged to add a predetermined offset to the control signal from the or each beam computer (6).

7. Apparatus according to claim 6, wherein the or each adder (8) is associated with a respective store (14) which stores, in use, the repsective predetermined offset.

8. Apparatus according to claim 6 or claim 7, further comprising control means (15) for varying the offsets added by the or each adder (8) in use.

**Patentansprüche**

1. Verfahren zur Halbtonreproduktion einer Vorlage, bei dem eine Abbildungsfläche mit mehreren nebeneinander angeordneten Lichtstrahlen belichtet wird, die in einem einzigen Durchgang zu der teilweisen oder vollständigen Bildung einer Anzahl von Halbtonrasterflächen beitragen, wobei die Lichtstrahlen in Abhängigkeit von der Vorlageninformation und der Halbtoninformation so moduliert werden, daß sie eine Halbtonwiedergabe der Vorlage erzeugen, dadurch gekennzeichnet, daß die Intensitäten der Lichtstrahlen (B1—B6) einer zyklischen Modulation quer zur Abtastrichtung unterzogen werden.

2. Verfahren nach Anspruch 1, bei dem in einem vorher festgelegten Schritt zur Bestimmung eines Optimums die Frequenz und/oder Phase und/oder Amplitude der zyklischen Modulation der Intenität verändert wird/werden.

3. Verfahren nach Anspruch 2, das mehrere Farbtrennungen beinhaltet und bei dem für jede Trennung die optimale zyklische Modulation vorher festgelegt wird.

4. Verfahren nach den Ansprüche 1 oder 2, bei dem die Modulation der Lichtstrahlen (B1—B6) sinusförmig erfolgt.

5. Vorrichtung zur Halbtonreproduktion einer Vorlage, mit einem Halter (11) für die Abbildungsfläche, Vorrichtungen zur Erzeugung mehrerer nebeneinander angeordneter Lichtstrahlen (B1—B6), wobei die Abbildungsfläche und die Lichtstrahlen relativ zueinander bewegbar sind, was ein Abtasten der Abbildungsfläche durch die Lichtstrahlen ermöglicht; und einer ersten Modulationsvorrichtung (9) zur Modulation der Lichtstrahlen (B1—B6) in Abhängigkeit von der Vorlageninformation und der Halbtoninformation, dadurch gekennzeichnet, daß eine zweite Modulationsvorrichtung vorgesehen ist, mit der die Intensität der Lichtstrahlen (B1—B6) quer zur Abtastrichtung zyklisch moduliert werden.

6. Vorrichtung nach Anspruch 5, bei der die erste Modulationsvorrichtung aus einem oder mehreren Strahlencomputern (6) besteht, die Steuersignale erzeugen zur Steuerung entsprechender Modulatoren (9), mit denen die Lichtstrahlen moduliert werden, weiterhin die zweite Modulationsvorrichtung eine oder mehrere Addiervorrichtungen (8) enthält, von denen jeweils eine für jeden Modulator (9) bestimmt ist und die Addiervorrichtungen so angeordnet sind, daß sie die Steuersignale jedes Strahlencomputers (6) in vorher festgelegter Weise verändern.

7. Vorrichtung nach Anspruch 6, bei der der oder jeder Addiervorrichtung ein entsprechender Speicher (14) zugeordnet ist, der während des Betriebs die entsprechende, vorher festgelegte Abweichung speichert.

8. Vorrichtung nach Anspruch 6 oder 7, die weiterhin Steuervorrichtungen (15) enthält, die während des Betriebes eine Veränderung der von den Addiervorrichtungen (8) bewirkten Abweichungen ermöglichen.

**Revendications**

1. Une méthode de génération de reproduction en dem-ton d'une image, méthode qui comprend l'exposition d'une surface d'affichage à une pluralité de faisceaux lumineaux (B1—B6) disposés côte à côte, ce qui contribue à la formation de une seule passe d'une partie ou de la totalité d'un nombre de zones à points en demi-ton; les faisceaux lumineux étant modulés en conformité avec les informations à l'image et les informations en demi-ton pour générer une représentation en demi-ton de l'image caractérisée par l'application d'une modulation cyclique aux intensités des faisceaux lumineux (B1—B6) dans le sens transversal par rapport à la direction du balayage.

2. Une méthode, selon la revendication 1, permettant de faire varier dans la cadre d'une phase prédéterminée, un ou plusieurs paramètres tirés de la fréquence, de la phase et de l'amplitude de la modulation cyclique des intensités afin de déterminer un ensemble optimal.

3. Une méthode, selon la revendication 2, permettant de générer une pluralité de séparations de couleurs dont la modulation cyclique optimale est prédéterminée pour chaque séparation.

4. Une méthode, selon la revendication 1 ou 2, suivant laquelle les faisceaux lumineux (B1—B6) sont modulés dans le mode sinusoidal.

5. Un appareil pour générer une reproduction en demi-ton d'une image, appareil comportant un support (11) pour une surface d'affichage; les moyens de générer une pluralité de faisceaux lumineux (B1—B6) disposés côte à côte, la surface d'affichage et les faisceaux lumineux étant relativement mobiles pour permettre le balayage de la surface d'affichage par les faisceaux; et un premier moyen de modulation (9) des faisceaux lumineux (B1—B6) conformément aux informations à l'image et aux informations en demi-ton, caractérisées par un deuxième moyen de modulation permettant d'appliquer une modulation cyclique aux intersités des faisceaux lumineux (B1—B6) dans la sens transversal par rapport à la direction du balayage.

6. Un appareil, selon la revendication 5, dont le premier moyen de modulation comporte un ou plusieurs calculateurs de faisceaux (6) permettant de générer des signaux de commande de modulateurs contrôlant les modulateurs respectifs des faisceaux (9), le deuxième moyen de modulation comportant un ou plusieurs additionneurs (8), à raison d'une par modulateur (9); ces additionneurs sont disposés afin d'ajouter un décalage prédéterminé au signal de commande en partant du calculateur ou de chaque calculateur de faisceaux.

7. Un appareil, selon la revendication 6 dans lequel l'additionneur ou chaque additionneur (8) est associé à une mémoire respective (14) qui mémorise le décalage respectif prédéterminé, pendant le fonctionnement.

8. Un appareil, selon la revendication 6 ou 7, comportant un moyen supplémentaire de commande (15) permettant de faire varier les décalages additionnés par l'additionneur ou chaque additionneur (8) employé.

# Fig.1.

B1 B2 B3 B4 B5 B6

a b c d e f

# Fig.3.

INTENSITY

B1 B2 B3 B4 B5 B6
BEAMS

# Fig.2.